# EUROPÄISCHE PATENTANMELDUNG

(11) **EP 1 087 174 A2**
(43) Veröffentlichungstag der Anmeldung: **28.03.2001**
(21) Anmeldenummer: 00120552.5
(22) Anmeldetag: 20.09.2000
(51) Int. Cl.: F17C 9/00, F17C 9/02, F17C 13/02

(54) **Verfahren zum Entnehmen eines gasförmigen und flüssigen kryogenen Mediums aus einem Speicherbehälter und Speicherbehälter**

(30) Priorität: 22.09.1999 DE 19945462
(71) Anmelder: Linde Aktiengesellschaft, 65189 Wiesbaden (DE)
(72) Erfinder: Mack, Klaus-Dieter, Dipl.-Ing., 83607 Holzkirchen (DE); Reese, Wilfried-Henning, Dipl.-Ing., 85716 Unterschleissheim (DE); Schimmer, Herbert, Dipl.-Ing., 82041 Oberhaching (DE)
(74) Vertreter: Zahn, Christoph

(57) **Zusammenfassung**

Es wird ein Verfahren zum Entnehmen eines gasförmigen und flüssigen kryogenen Mediums aus einem Speicherbehälter beschrieben, wobei die Entnahme aus der Gas- und der Flüssigphase über jeweils wenigstens eine Entnahmeleitung erfolgt und diese Entnahmeleitungen zu wenigstens einer zu dem Verbraucher des kryogenen Mediums führenden Leitung zusammengeführt werden und mittels eines Ventiles zwischen den beiden Entnahmeleitungen umgeschaltet werden kann. Beschrieben wird ferner ein Speicherbehälter für ein kryogenes Medium mit wenigstens einer Entnahmeleitung, über die gasförmiges kryogenes Medium entnommen werden kann, und mit wenigstens einer Entnahmeleitung, über die flüssiges kryogenes Medium entnommen werden kann, mit einer Leitung, zu der die Entnahmeleitungen zusammengeführt sind und mit wenigstens einem Ventil, das ein Umschalten zwischen den beiden Entnahmeleitungen ermöglicht.

Erfindungsgemäß wird das Ventil (9) mittels wenigstens eines elektrochemischen Aktors (10) bewegt.

Hierbei können das Ventil (9) und/oder der elektrochemische Aktor (10) innerhalb des Speicherbehälters (1) angeordnet sein.

## Beschreibung

Die Erfindung betrifft ein Verfahren zum Entnehmen eines gasförmigen und flüssigen kryogenen Mediums aus einem Speicherbehälter, wobei die Entnahme aus der Gas- und der Flüssigphase über jeweils wenigstens eine Entnahmeleitung erfolgt und diese Entnahmeleitungen zu wenigstens einer zu dem Verbraucher des kryogenen Mediums führenden Leitung zusammengeführt werden und mittels eines Ventiles zwischen den beiden Entnahmeleitungen umgeschaltet werden kann.

Die Erfindung betrifft ferner einen Speicherbehälter für ein kryogenes Medium mit wenigstens einer Entnahmeleitung, über die gasförmiges kryogenes Medium entnommen werden kann, und mit wenigstens einer Entnahmeleitung, über die flüssiges kryogenes Medium entnommen werden kann, mit einer Leitung, zu der die Entnahmeleitungen zusammengeführt sind und mit wenigstens einem Ventil, das ein Umschalten zwischen den beiden Entnahmeleitungen ermöglicht.

Im folgenden werden bei den Bezeichnungen spezieller kryogener Medien entsprechend ihrem Aggregatzustand die Buchstaben "G" für "gasförmig" und "L" für "flüssig" bzw. "liquid" vorangestellt; also z. B. GH₂ bzw. LH₂ für gasförmigen bzw. flüssigen Wasserstoff. Weiterhin werden die Begriffe "konditioniert" und "Konditionierung" verwendet. Unter diesen Begriffen sei die Erhöhung des Druckes und der Siedetemperatur der Flüssigkeit in dem Fahrzeug-Speicherbehälter auf die Betriebswerte zu verstehen.

Insbesondere Wasserstoff gewinnt gegenwärtig durch den steigenden Energiebedarf und das gestiegene Umweltbewußtsein als Energieträger zunehmend an Bedeutung. So sind erste Versuche im Gange, Flugzeuge, Lastkraftwagen, Busse sowie Personenkraftwagen mittels mit Wasserstoff-betriebener Turbinen bzw. Motoren anzutreiben. Auch Erdgas, insbesondere verflüssigtes Erdgas, wird bereits in ersten Feldversuchen zum Antreiben von Bussen und Personenkraftwagen verwendet.

Die Speicherung des Wasserstoffs oder Erdgases "an Bord" der oben genannten Verkehrsmittel ist dabei in flüssiger Form am sinnvollsten. Zwar muss, z. B. im Falle des Wasserstoffs, dieser dazu auf etwa 25 K abgekühlt und auf dieser Temperatur gehalten werden, was nur durch entsprechende Isoliermaßnahmen an den Speicherbehältern bzw. -tanks zu erreichen ist, doch ist eine Speicherung in gasförmigem Zustand aufgrund der geringen Dichte von GH₂ in der Regel in den obengenannten Verkehrsmitteln ungünstiger, da die Speicherung hierbei in großvolumigen Speicherbehältern bei hohen Drücken erfolgen muss.

Bei dem Betrieb von Kraftfahrzeugen, die mit einem kryogenen Medium, wie beispielsweise Wasserstoff oder Erdgas betrieben werden, kann es betriebsbedingt innerhalb des Speicherbehälters nach längeren Stillstandszeiten ― also Zeiten, zu denen keine Entnahme von kryogenem Medium aus dem Speicherbehälter erfolgt ― zu einem Abblasedruck kommen, der deutlich über dem benötigten Druck des Verbrauchersystems ― also des Motors bzw. der Brennstoffzelle ― liegt.

Benötigt der Verbraucher nunmehr kryogenes Medium aus dem Speicherbehälter, so muss der Druck innerhalb des Speicherbehälters so schnell als möglich auf den benötigten Druck des Verbrauchers abgesenkt und anschließend möglichst konstant auf diesem gehalten werden. Dies ist erforderlich, damit vor dem Beginn einer erneuten Stillstandszeit eine Druckdifferenz vorhanden ist, die erst eine Stillstandszeit ohne ein Abblasen von gasförmigem kryogenem Medium aus dem Speicherbehälter ermöglicht.

Bei den bisher realisierten kryogenen Speicherbehältersystemen für Kraftfahrzeuge wird der für den Verbraucher benötigte Massenstrom an kryogenem Medium im wesentlichen mittels zweier Verfahrensweisen entnommen bzw. bereitgestellt.

Bei der ersten Verfahrensweise wird gasförmiges kryogenes Medium aus dem Druckpolster über der Flüssigkeit, also aus der Gasphase des Speicherbehälters entnommen. Dazu ist es notwendig, dass die im Speicherbehälter befindliche Flüssigkeit durch Einbringung von Wärmeenergie verdampft wird, um die entnommene Menge an gasförmigem kryogenem Medium zu ersetzen.

Bei der zweiten Verfahrensweise hingegen wird eine sog. Mischentnahme realisiert, wobei zunächst wiederum gasförmiges Medium aus der Gasphase des Speicherbehälters entnommen wird und erst bei Erreichen des gewünschten Systemdruckes des Verbrauchers auf eine Entnahme von flüssigem Medium aus dem Speicherbehälter umgeschaltet wird. Dieser zweiten Variante wird im Regelfall der Vorzug gegeben, da die rein gasförmige Entnahme von kryogenem Medium aus dem Speicherbehälter insbesondere bei großen Entnahmemengen nicht zweckmäßig ist.

Die für die Druckhaltung innerhalb des Speicherbehälters erforderlichen Wärmemengen bzw. Energien können bei den meisten Fahrzeugen nicht bzw. nur mit einem entsprechend hohen technischen Aufwand zur Verfügung gestellt werden. Ein weiterer Nachteil dieser Verfahrensweise ist darin zu sehen, dass die Entnahme von gasförmigem kryogenem Medium in großen Mengen entsprechend große Leitungsquerschnitte zur Folge hat.

Bei der beschriebenen Mischentnahme stellt sich das Problem, dass das für die Umschaltung zwischen den beiden Entnahmeleitungen benötigte Ventil ― hierbei handelt es sich im Regelfall um ein sog. 3-Wege-Ventil ― innerhalb des Speicherbehälters oder in einer speziellen vakuumisolierten Ventilbox angeordnet werden muss. Insbesondere bei einem innerhalb des Speicherbehälters eingebauten Ventiles ist der Aufwand im Falle einer Wartung des Ventiles jedoch sehr hoch. Eine Ventilbox benötigt zudem einen entsprechend großen Platzbedarf, der bei den herkömmlichen Kraftfahrzeugtanksystemen oftmals nicht zur Verfügung steht.

Die bisher verwendeten Ventile ― unabhängig davon, ob sie in einer Ventilbox oder innerhalb des Speicherbehälters eingebaut werden ― besitzen im Regelfall Magnetantriebe. Aufgrund der geringen Spannung der (Bord)Elektronik der Kraftfahrzeuge arbeiten diese Magnetantriebe jedoch nicht zuverlässig.

Aufgabe der vorliegenden Erfindung ist es, ein gattungsgemässes Verfahren zum Entnehmen eines gasförmigen und flüssigen kryogenen Mediums aus einem Speicherbehälter sowie einen gattungsgemässen Speicherbehälter für ein kryogenes Medium anzugeben, das bzw. der die genannten Nachteile vermeidet.

Das erfindungsgemässe Verfahren zum Entnehmen eines gasförmigen und flüssigen kryogenen Mediums aus einem Speicherbehälter ist dadurch gekennzeichnet, dass das Ventil mittels wenigstens eines elektrochemischen Aktors bewegt wird.

Der erfindungsgemässe Speicherbehälter für ein kryogenes Medium zeichnet sich dadurch aus, dass wenigstens ein elektrochemischer Aktor, der das Ventil bewegt, vorgesehen ist.

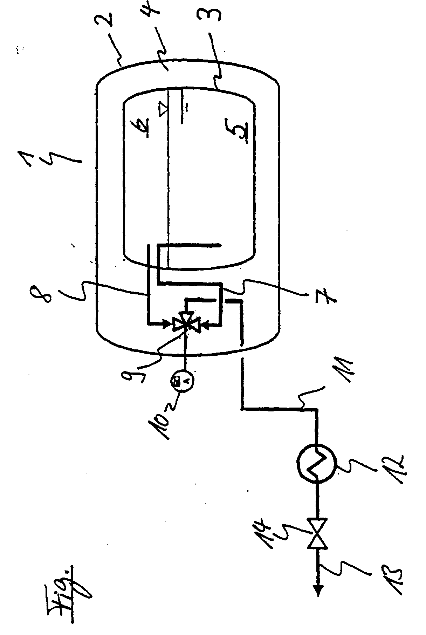

Das erfindungsgemässe Verfahren zum Entnehmen eines gasförmigen und flüssigen kryogenen Mediums, der erfindungsgemässe Speicherbehälter für ein kryogenes Medium sowie weitere Ausgestaltungen des Verfahrens sowie des Speicherbehälters seien anhand des in der Figur dargestellten Ausführungsbeispieles näher erläutert.

Die **Figur** zeigt einen Speicherbehälter 1 bestehend aus einem Außenbehälter 2 sowie einem Innenbehälter 3. Der Bereich 4 zwischen dem Außen- 2 und dem Innenbehälter 3 ist vakuumisoliert. In dem Innenbehälter 3 ist das zu speichernde kryogene Medium gelagert.

Über der Flüssigphase 5 des kryogenen Mediums befindet sich das Gaspolster bzw. die Gasphase 6. Während flüssiges kryogenes Medium aus der Flüssigphase 5 über Leitung 7 entnommen wird, erfolgt die Entnahme von gasförmigem kryogenem Medium aus der Gasphase 6 über Leitung 8.

Die beiden Entnahmeleitungen 7 und 8 werden zu einer gemeinsamen Leitung 11 zusammengeführt. Über diese wird das entnommene gasförmige oder flüssige kryogene Medium beispielsweise dem Motor eines Kraftfahrzeuges oder einer Brennstoffzelle zugeführt. Wird das dem Verbraucher zugeführte kryogene Medium immer gasförmig benötigt ― wie dies beispielsweise bei den heutigen Kraftfahrzeugmotoren oder bei einer Brennstoffzelle der Fall ist ―, ist ein Wärmetauscher 12 vorzusehen, in dem das flüssige kryogene Medium - beispielsweise gegen das Kühlwasser des Kraftfahrzeuges - verdampft wird. Aus dem Wärmetauscher 12 wird das verdampfte kryogene Medium über die Leitung 13, in der ein Absperrventil 14 vorgesehen sein kann, dem Verbraucher zugeführt.

Das Umschalten zwischen den beiden Entnahmeleitungen 7 und 8 bzw. zwischen der Entnahme aus der Flüssig- oder Gasphase geschieht mittels des 3-Wege-Ventiles 9. Dieses wird erfindungsgemäss durch einen elektrochemischen Aktor 10 bewegt.

Anstelle der bisher verwendeten Magnetantriebe kommt nunmehr erfindungsgemäss ein elektrochemischer Aktor als Antrieb für das Ventil zum Einsatz. Dieser hat folgende Vorteile:
- kompakte Abmessung (z. B. ⌀: 40 mm, Länge: 30 mm)
- geringes Gewicht (ca. 50 g)
- Betrieb über Kfz-Bordnetz und einer einfachen kostengünstigen Ansteuerelektronik
- geringe Leistungsaufnahme (≤ 300 mA)
- hohe Lebensdauer (bis zu 10⁵ Hübe)

Die Erfindung weiterbildend wird vorgeschlagen, dass das Ventil 9 und/oder der elektrochemische Aktor 10 innerhalb des Speicherbehälters 1 angeordnet sind.

Mittels dieser Ausgestaltung wird sowohl ein Vereisen des Ventiles 9 als auch ein unerwünschtes Verdampfen des kryogenen flüssigen Mediums verhindert. Sofern der elektrochemische Aktor 10 außerhalb des Speicherbehälters 1 angeordnet ist, ist eine Wartung auf einfachem Wege möglich, ohne dass der Vakuumraum 4 des Speicherbehälters 1 berührt wird bzw. geöffnet werden muss.

Sofern es sich bei dem Speicherbehälter 1 um einen Kraftfahrzeug-Speicherbehälter handelt und das in ihm gespeicherte kryogene Medium dem Antrieb des Kraftfahrzeuges dient ― unabhängig davon, ob es einem Motor oder einer Brennstoffzelle zugeführt wird ―, wird der elektrochemische Aktor 10 gemäss einer vorteilhaften Ausgestaltung des erfindungsgemässen Verfahrens von der Stromversorgung des Kraftfahrzeuges versorgt.

## Patentansprüche

1. Verfahren zum Entnehmen eines gasförmigen und flüssigen kryogenen Mediums aus einem Speicherbehälter, wobei die Entnahme aus der Gas- und der Flüssigphase über jeweils wenigstens eine Entnahmeleitung erfolgt und diese Entnahmeleitungen zu wenigstens einer zu dem Verbraucher des kryogenen Mediums führenden Leitung zusammengeführt werden und mittels eines Ventiles zwischen den beiden Entnahmeleitungen umgeschaltet werden kann, **dadurch gekennzeichnet,** dass das Ventil (9) mittels wenigstens eines elektrochemischen Aktors (10) bewegt wird.

2. Verfahren zum Entnehmen eines gasförmigen und flüssigen kryogenen Mediums aus einem Speicherbehälter nach Anspruch 1, dadurch gekennzeichnet, dass das Ventil (9) und/oder der elektrochemische Aktor (10) innerhalb des Speicherbehälters (1) angeordnet sind.

3. Verfahren zum Entnehmen eines gasförmigen und flüssigen kryogenen Mediums aus einem Speicherbehälter nach Anspruch 1 oder 2, wobei der Speicherbehälter in einem Kraftfahrzeug angeordnet ist und das kryogene Medium dem Antrieb des Kraftfahrzeuges dient, dadurch gekennzeichnet, dass der elektrochemische Aktor (10) von der Stromversorgung des Kraftfahrzeuges versorgt wird.

4. Speicherbehälter für ein kryogenes Medium mit wenigstens einer Entnahmeleitung, über die gasförmiges kryogenes Medium entnommen werden kann, und mit wenigstens einer Entnahmeleitung, über die flüssiges kryogenes Medium entnommen werden kann, mit einer Leitung, zu der die Entnahmeleitungen zusammengeführt sind und mit wenigstens einem Ventil, das ein Umschalten zwischen den beiden Entnahmeleitungen ermöglicht, **dadurch gekennzeichnet**, dass wenigstens ein elektrochemischer Aktor (10), der das Ventil (9) bewegt, vorgesehen ist.

5. Speicherbehälter für ein kryogenes Medium nach Anspruch 4, dadurch gekennzeichnet, dass das Ventil (9) und/oder der elektrochemische Aktor (10) innerhalb des Speicherbehälters (1) angeordnet sind.
